# EUROPEAN PATENT APPLICATION

(11) **EP 0 149 357 A2**
(43) Date of publication of application: **24.07.1985**
(21) Application number: 84309079.6
(22) Date of filing: 27.12.1984
(51) Int. Cl.: C08F 283/10, C08F 279/02, C08G 59/40, C08G 59/42, C08J 5/24

(54) **Filament winding resins**

(30) Priority: 29.12.1983 US 566638
(71) Applicant: HERCULES INCORPORATED, Wilmington Delaware 19894 (US)
(72) Inventor: Adams, Leo Gerard, Midvale Utah 84047 (US); Braak, Edmund Carl, Salt Lake City Utah 84109 (US)
(74) Representative: De Minvielle-Devaux, Ian Benedict Peter

(57) **Abstract**

Filament winding resins having low viscosity and long pot lives, and a process for making them are disclosed. The resins comprise (a) high vinyl polybutadiene polymer having a molecular weight between about 1,000 and 3,000 and epoxy reactive functionality (b) a diepoxy compound, (c) ethylenically unsaturated reactive diluent, (d) peroxide crosslinker and (e) catalyst. The ethylenically unsaturated reactive diluents include methacrylates.

## Description

This invention relates to the preparation of liquid resins that are suitable for impregnating winding filaments in the wet-winding of composite structures, and particularly to the preparation of such resins that contain high vinyl, functionally terminated polybutadienes and yield low-density crosslinked products when cured.

The use of functionally-terminated polybutadienes to make crosslinkable resins is well known. See, for example, U.S. Patents 4,269,759; 4,016,022; 3,989,769; 3,931,354; 3,925,275; 3,922,426; 3,860,672; 3,853,815: 3,751,522; 3,635,891; 3,616,193; 3,528,878; 3,431,235; and 3,135,716. In these patents, the resins typically are formulated with both a "chain extender", which reacts with the terminal groups of the polybutadiene, and with free-radical initiators for crosslinking of polybutadiene.

However, these patents are not primarily concerned with the preparation of resins that are suitable for filament-winding.

U.S. Patent 3,616,193 discloses the advantages of functionally terminated polybutadienes in filament-winding resins and their potential for providing crosslinked products that have relatively low density. U.S. Patent 4,421,806 discloses a wide variety of processes for preparing polybutadiene resins, including some carboxy-terminated ones, that are said to be specifically suitable for filament-winding. However, the latter patent fails to show how to adjust selectively the many disclosed formulation parameters to produce resins having superior characteristics, in particular, low shrinkage characteristics, for filament-winding or the preparation of "prepregs".

In particular, such resins not only should have a cured density that is as low as possible, but also must have other properties that are more important, depending on the intended application, and call for formulation parameters that may conflict with those that decrease density. Thus for all applications, the linear shrinkage is critical and should be less than 3%. Overall, it is essential that the various "trade-offs" should be known and controllable to provide the desired balance of properties.

According to the invention, a process for preparing liquid resins that are suitable for filament-winding of composite structures, in which a polymer component containing a high vinyl, functionally-terminated poly(1,2-butadiene), the functional groups being reactive with epoxy groups, is intimately mixed with an epoxy component, an ethylenically unsaturated component, a peroxide free-radical initiator component, and a catalyst that catalyzes the reaction between the functional groups and epoxy groups, is characterized in that (i) the polymer component consists essentially of (a) between about 60 and 100 parts by weight of high vinyl, functionally-terminated polybutadiene that has a molecular weight between about 1,000 and 3,000, and (b) between about 0 and 40 parts by weight of a low vinyl functionally-terminated polybutadiene having a molecular weight between about 1,000 and 3,000, or a hydrogenated and functionally-terminated polybutadiene or a mixture of the two, each of (a) and (b) having about 2 functional groups per polymer molecule that are reactive with epoxy; (ii) the epoxy component consists essentially of one or more diepoxy compounds each having two cycloaliphatic groups in each of which adjacent carbon atoms are connected by an oxygen atom to provide between about 0.5 and 1.05 epoxy groups for each of the said epoxy-reactive functional groups; (iii) up to about 80 parts by weight of an ethylenically unsaturated component that includes a methacrylate compound, per 100 parts by weight of the polymer component, is included in the mixture to lower the viscosity of the liquid resin: and (iv) the peroxide free-radical initiator component has a 10-hour half-life temperature between about 90°C and 105°C.

The term "high vinyl, functionally-terminated polybutadiene" refers to polybutadienes having at least about 80% of their unsaturation in the form of the 1, 2-vinyl group: 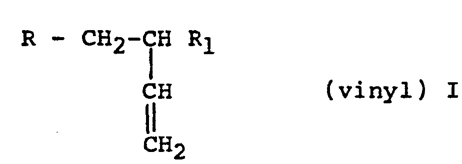 wherein R and R₁ constitute the remainder of the polybutadiene molecule and contain, on the average, between about 14 and 49 other 1, 2 vinyl groups.

The term "low vinyl functionally-terminated polybutadiene" refers to polybutadienes that contain a relatively large number of 1, 4 cis and trans groups: 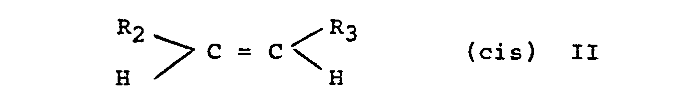 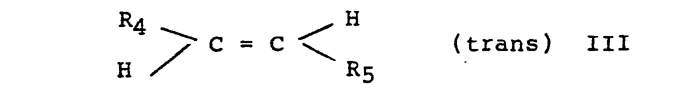 wherein the R_{2'} R₃ and R₄, R₅ are respectively the remainders of the polybutadiene molecule and less than 80% of the unsaturation in the remainders is composed of 1, 2 vinyl groups.

The preferred functionally-terminated polybutadienes are carboxy-terminated polybutadienes.

Also according to the invention, liquid filament-winding resins are characterized in that they are made by the process according to the invention, they have a pot life, sufficient for filament-winding, of about 10 or more hours, and they cure to thermally stable, solid, crosslinked resins having a linear shrinkage value less than 3%.

In using the liquid filament-winding resins according tc the invention, the crosslinking of the polymer component, (which is initiated by the peroxide-free radical initiator component) is preferably made to occur through application of heat to the resin. The reaction between the epoxy component and the-polymer-component can be initiated during the filament-winding operation.

Thus, the ethylenically unsaturated reactive diluents are included in the resin formulations to maintain an appropriate viscosity level in the resin during filament-winding, when condensation of the functionally-terminated polybutadiene is being catalytically initiated. Normally, only after the winding is complete, the ethylenically unsaturated reactive diluent enters into the peroxy-crosslinked network of the functionally-terminated polybutadiene during cure of the filament-wound body.

The liquid filament-winding resins are not only adapted for use as a crosslinkable resin matrix for winding filaments about a mandrel: they may also be used in coating fibrous tapes and wafers to make "prepregs". The prepregs can then be used as added, cure-compatible, reinforcement to filament-wound bodies made using the liquid filament-winding resin.

The low vinyl or hydrogenated functionally terminated polybutadiene, if included in the resins, serves to lower the modulus and increase the flexability of the cured resins. Hydrogenated and functionally-terminated polybutadiene, i.e. greater than 90% of the polybutadiene is saturated, can be used in place of the low vinyl functionally-terminated polybutadiene, in whole or in part.

The manufacture of functionally-terminated polybutadiene is well known. For example, carboxy-terminated polybutadienes can be prepared by anionic polymerization of 1,3-butadiene. In a typical reaction system, an alkali metal, e.g., lithium or sodium, is dispersed with the butadiene in a polar solvent - such as tetrahydrofuran. The butadiene undergoes a 1,2 polymerization to produce a polyaliphatic hydrocarbon terminated by the alkali metals. The resulting polymer is characterized mainly by an elongated carbon chain having pendant vinyl groups on alternate carbon atoms of the chain. The polymer is then reacted with carbon dioxide and subsequently acidified to provide the desired high vinyl, carboxy- ! terminated polybutadiene. U.S. Patent 3,135,716 discloses preparation of functionally-terminated polybutadienes. Functionally-terminated polybutadienes preferred for use in this invention are commercially available.

It is important that the epoxy component should consist essentially of one or more diepoxy compounds each having a pair of cycloaliphatic groups in each of which adjacent carbon atoms are connected by an oxygen atom to provide the epoxy functionality of the diepoxy compound. Epoxy compounds suitable for use in this invention include those having the general formula: 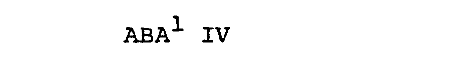 where each of A and A is a cycloaliphatic group bearing an oxygen atom bonded to adjacent carbon atoms of its ring structure and B is a divalent, aliphatic, linking group.

The epoxy component is selected to be sufficiently reactive to react in the presence of catalyst with the functional groups of the functional-terminated polybutadiene at temperatures below about 80°C. The molecular weight (number average) of the diepoxy compounds ranges between about 230 and 360.

Preferred epoxy components additionally have viscosities low enough to reduce initially the viscosity of the liquid filament-winding resin into which they are added. Examples of di-epoxy compounds are 3,4-epoxycyclohexyl-methyl-3,4 epoxycyclohexanecarboxylate; 3,4 epoxy-6-methylcyclohexylmethyl 3,4 epoxy-6-methylcyclohexane carboxylate; bis (2,3-epoxycyclopentyl) ether; 2-(3,4-epoxycyclohexyl-5,5-spiro-3, 4-epoxy cyclohexane-meta-dioxane: and bis (3,4-epoxycyclohexyl) adipate. The 3,4-epoxycyclohexyl-methyl-3,4 epoxycyclohexanecarboxylate is preferred.

The amount of the epoxy component used is such that there are between about 0.5 and 1.05 epoxy groups for each functional group of the functionally-terminated polybutadiene. A more preferred range for the liquid filament-winding resins is between about 0.9 and 1.0 epoxy groups for each terminal functional group (i.e. carboxy) of the polymer component.

The ethylenically unsaturated reactive diluents may contain such groups as allyl, vinyl, isopropenyl, or acrylats and acording to the invention, they must contain methacrylate groups in order to provide superior characteristics.

Examples of suitable ethylenically unsaturated reactive diluents include the following: Laurylmethacrylate; isodecylmethacrylate; cyclohexyl-methacrylate; tetrahydro- furfurylmethacrylate; isobornylmethacrylate; dicyclopentenyl oxyethylmethacrylate; tetraethyleneglycoldimethacrylate; 1,6-hexanedioldimethacrylate; 1,3-butyleneglycoldimeth- acrylate and trimethylolpropanetrimethacrylate. These or other methacrylate compounds may be used in combination with other unsaturated reactive diluents, such as a-methylstyrene; vinyltoluene; divinylbenzene; t-butylstyrene; m-diisopropenylbenzene; diallylphthalate; diallylmaleate; and triallylcyanurate.

Selection and blending of ethylenically unsaturated reactive diluents containing methacrylate compounds contributes significantly to the liquid filament-winding resin volatility, shrinkage, density and other physical properties. Methacrylate reactive diluents cannot be replaced by acrylates, which are denser, more viscous, more reactive, more toxic and more volatile than the methacrylates. In addition, the lower molecular weight hydrocarbon ethylenically unsaturated reactive diluents such as styrene, alpha-methyl styrene, vinyl toluene and divinyl-benzene are too volatile to be used alone, although such use is suggested in the aforesaid U.S. Patent 4,421,806. Higher molecular weight hydrocarbons such as m-diisopropenylbenzene and p-diisopropenylbenzene also have not been able to replace the methacrylates.

The peroxide free-radical initiators suitable for use in the liquid filament-winding resins include those selected from peroxyketals, peroxyesters and dialkyl peroxides, that have a 10-hour half-life temperature between about 90°C and 105°C. Preferably, undiluted peroxides that are completely soluble in the resin formulations are used. Examples of organic peroxide compounds that may be used in the invention are l,l-di(t-butylperoxy) 3,3,5-trimethylcyclohexane; t-butyl- peroxy-2-ethylhexaneoate; t-butylperoxybenzoate; and 2,5-dimethyl-2,5-di(benzoylperoxy) hexane. Combinations of such peroxide free-radical initiators may be used.

The amount of the peroxide free-radical initiator used in liquid filament-winding resins is such that there is initially between about 0.004 and 0.040 peroxy groups in the peroxide free-radical initiator component for each double bond in the polymer component of the liquid filament-winding resins. A more preferred range is between about 0.018 and 0.028 peroxy groups for each such double bond.

Any catalyst that catalyzes the reaction between epoxy compound and the terminal functionality of the functionally-terminated polybutadiene at a temperature below about 80°C. may be used. Exemplary catalysts for catalyzing reaction between epoxy and carboxy groups are chromium carboxylates such as the chromium salt of 3,5-diisopropylsalicylate and chromium octoate.

Table A lists preferred and more preferred ranges, in parts by weight, of the ingredients used in the liquid filament-winding resins of this invention:

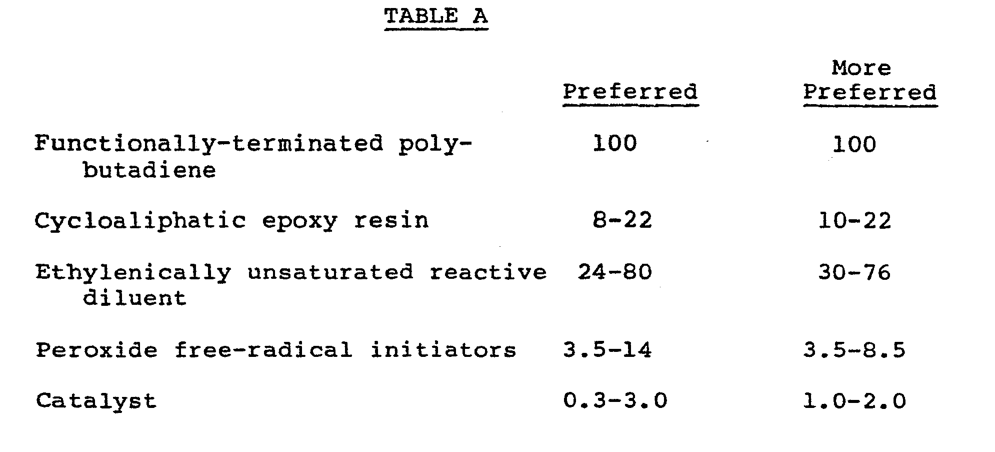

In preparing the liquid filament-winding resins of this invention, the ingredients are weighed into an appropriate mixing container, the preferred order of addition being: polymer component, epoxy component, ethylenically unsaturated reactive diluent, peroxide and finally catalyst. The container is heated externally and mechanically stirred; the resin temperature is preferably not allowed to exceed about 40°C. A uniform, well mixed resin formulation results usually within 10 to 30 minutes. The mixtures are then cooled to ambient temperature (e.g. 25°C.) to have viscosities preferably between about 1.5 to 3.5 Kcps at 25°C. Pot lives range between about 10 to 100 hours at these viscosities.

Catalyst-containing complete resin formulations can be stored for several months at -18°C. without significant viscosity change or loss of properties. Resin formulations, complete except for catalyst or epoxide, can be stored for at least seven months at -18°C. without detectable viscosity change or loss of properties.

The principle use for the resins of this invention is in filament-winding. Dry fiber tows, such as Kevlar, graphite, glass, ceramic or others with or without sizings, are impregnated with the liquid filament-winding resin and wound upon a rotating mandrel. The resin content of the fiber varies from about 25 to 40 weight percent; the fiber volumes vary from about 55% to 65% with 58% to 61% being preferred.

The liquid filament-winding resins cure at temperatures in a range between about 20°C. and 177°C. The optimum cure cycle will vary with the particular resin formulation and application. An exemplary cure cycle is heating to a temperature between about 70°C. and 80°C. for 3 hours, followed by heating to a temperature between about 90°C. and 110°C. for 2 hours followed by heating to a temperature between about 110°C. and 130°C. for 1 hour, followed by heating to a temperature between about 130°C. and 177°C. for four hours. Somewhat lower cure temperatures may be used if aluminum fittings are incorporated into the filament wound structure undergoing cure. The initial step or steps of the cure cycle are designed to encourage the epoxy/carboxy chain extension reaction to occur while excluding the vinyl polymerization initiated by the peroxide free-radical initiator; however, in some cases the desired properties are achieved by permitting the bulk of both reactions to occur almost simultaneously.

Certain ethylenically unsaturated reactive diluents like isobornylmethacrylate (IBOMA), alone and in combination with hexanedioldimethacrylate (HDDMA), which constitute preferred diluents, can cause earlier decomposition of the peroxide free-radical initiator. The resulting early exotherm produced by IBOMA is not necessarily undesirable, but can be mitigated if desired by replacing at least 10% by weight of the IBOMA, or combination with HDDMA, with other suitable diluents such as lauryl methacrylate.

Early peroxide exotherms can also occur if the epoxy/ carboxy reaction of the functionally terminated polybutadiene and epoxy compound is particularly vigorous during the initial cure cycle step at 80°C. Such early cure cycle exotherms can also be mitigated by replacing at least about 10% by weight of the higher 1,2 vinyl polybutadiene such as C-1000 (Nippon Soda) with lower 1,2 vinyl polybutadienes. Also, if the initial cure cycle step temperature is lowered to 70°C. from 80°C., the early exotherm caused by peroxide reaction can be mitigated.

Another use for the resins of this invention is the fabrication of prepregs containing continuous fibers such as in tapes or wafers. The prepreg cure chemistry is identical to that of the liquid filament-winding resins of this invention. Prepreg tapes and wafers are used in filament-wound constructions to both reinforce and to rapidly change contours or increase wall thicknesses in specific areas for structural reasons. The winding resins of this invention can be used directly to make prepreg tapes and wafers. Dry sized graphite or Kevlar fiber in the form of either compact multiple tows or flat, spreadout, linear fibers formed from multiple tows, or woven tape, is impregnated with a liquid filament-winding resin according to the invention having moderate viscosity, e.g., 3600 cps. The impregnated multiple tows are wound on a mandrel at about 27DC. between close-fitting, release-film-covered metal plates to form wafers. Completed wafers are sealed in nonadhering polyethylene bags. The impregnated, spread-out, linearly oriented fibers or woven tape are sandwiched between release paper and wound into rolls. In both cases, the impregnated fiber is then "B-staged" (partially cured) under conditions which exclude decomposition of the dissolved peroxide. Temperatures for B-staging range between about 27°C and 82°C, but temperatures between about 60°C and 77°C are preferred. Proper B-staging increases the resin viscosity to between about 70,000 and 125,000 cps at 50°C. Prepreg materials made in this manner are stored at 0°C.

The following examples are intended to illustrate this invention by way of specific embodiments thereof.

The properties of the resins identified in Tables I-VII were obtained according to the following procedures. In making these resins, the ingredients were mixed as previously described until a clear solution resulted. The clear solutions were degassed at about 25°C. and then cured neat. All resins were cured in a forced-air oven using the following cure cycle:
4 hrs. 80°C., 2 hrs. 104°C., 1 hr. 121°C., and 3 hrs. 141°C. Heat distortion temperatures at 264 psi were measured on standard, cast 5-inch long by half-inch square bars using a 2°C./min. temperature increase. Densities were measured on 1/4 X 1/2 X 1/2 inch samples using the weight in air, weight in water technique ASTM D71-78. The samples were sawed from the bottoms of the HDT bars, and sanded smooth on all sides. Linear shrinkage was measured with the 65 cm³ mold described in ASTM Procedure D2566-79. A silicone release agent (DC-20) was applied from solvent and prebaked on the molds for 2 hours at 141°C. All steel or glass molds for all cast specimens were treated with release agent in the same way. Thermocouples were not used in the shrinkage samples. Measurements were made only on samples which released fully and were free sliding after cure. Measurements were made with a 12-inch micrometer after conditioning the samples three days at 50% RHM 75°F. Volatility was determined from the weight loss of approximately 5 gram, 1/16-inch thick neat resin samples cured in shallow, disposable aluminum weighing cups in the same forced-air oven with all the other samples. Initial viscosities and pot lives were measured at 25.0°C. with a Haake viscometer using a PKI cone with a short pressure spring, 500 torque and speed of 9. Tensile properties were measured at 0.2 IPM, 45% RH and ambient pressure according to ASTM D638-79.

### Example 1

Formulations (A) through (H) set forth in Table I illustrate formulations by ingredient and amount (parts by weight) for making the liquid filament-winding resins of this invention:

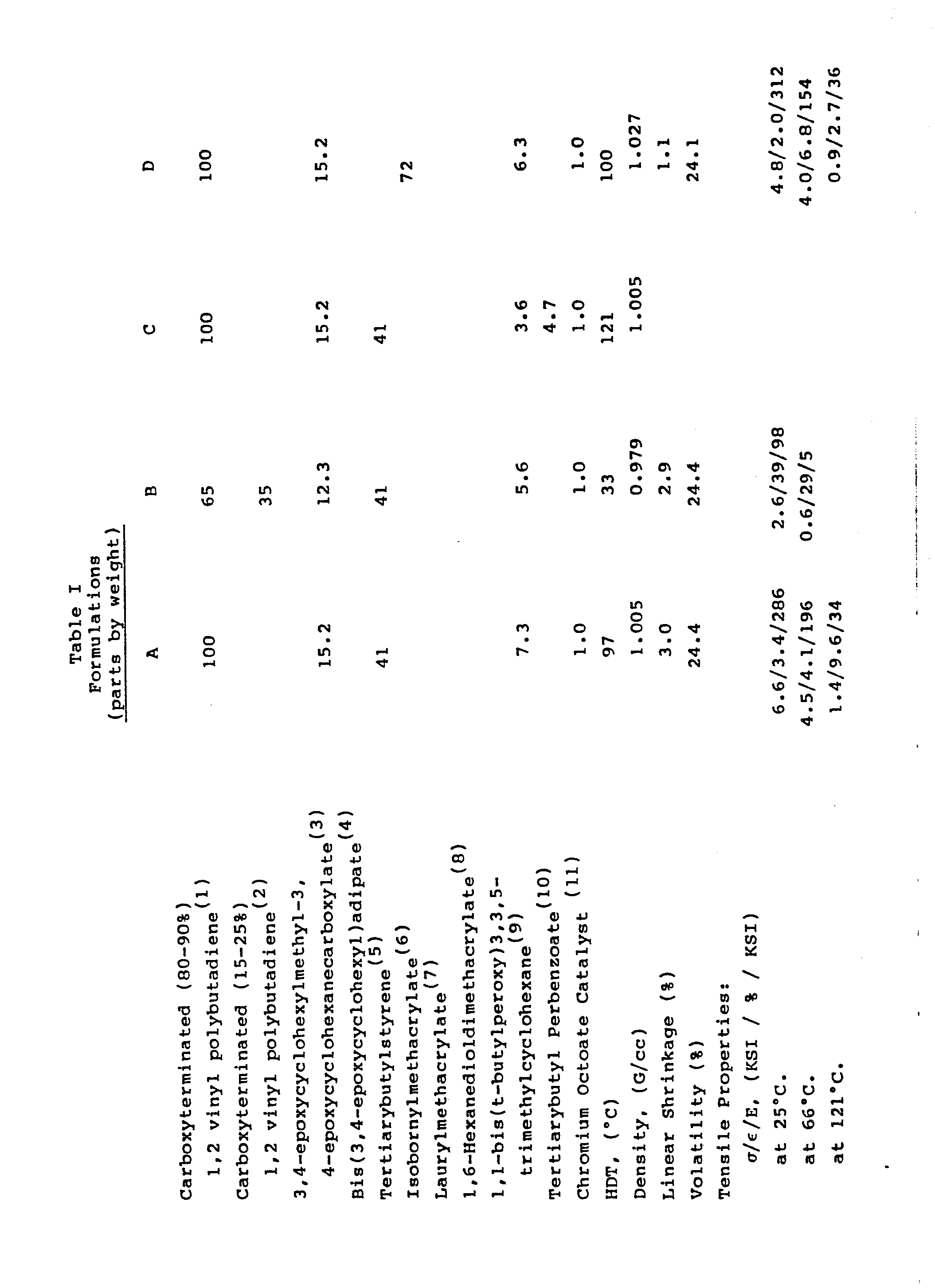

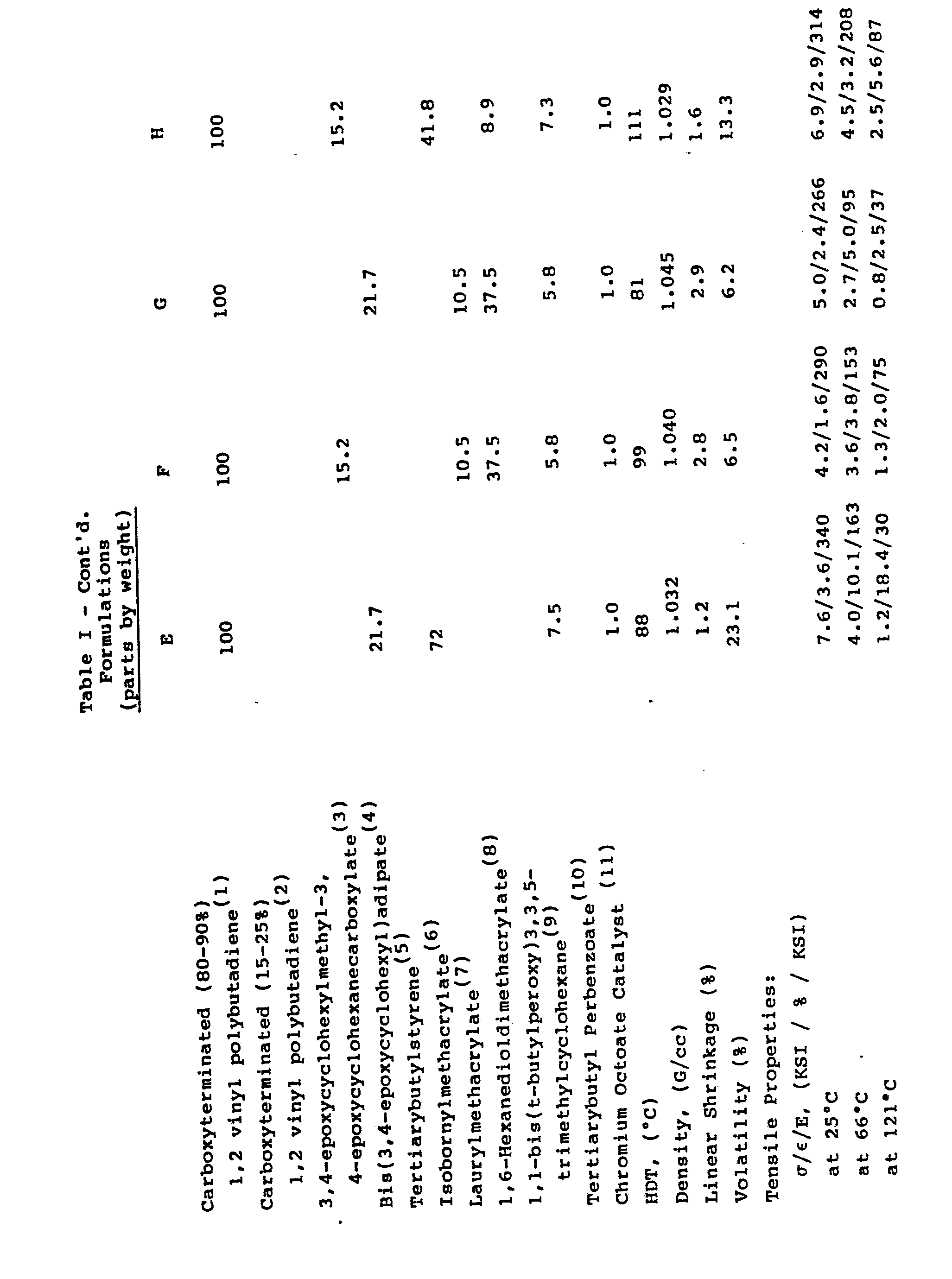

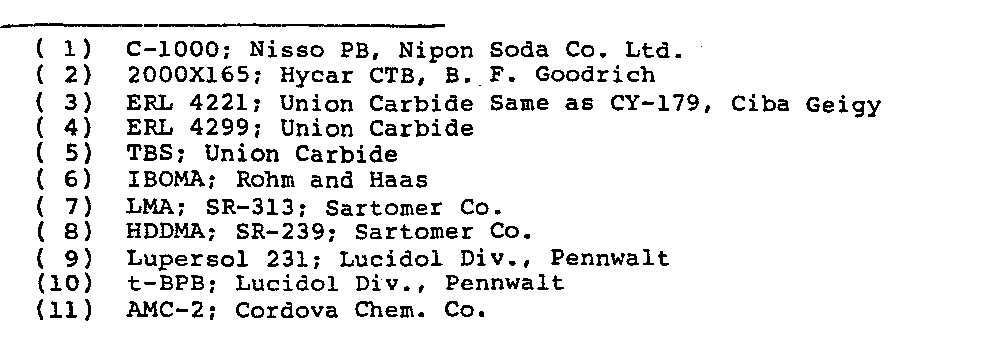

### Example 2

Four groups of three, six-inch I.D. hydroburst test bottles were filament wound with formulation H of Table I and with three proprietary epoxy resins. The bottles were wound with Hercules W/IM7X-12K graphite fiber impregnated with about 27 weight % of the resins, at either ambient (21-24°C) for resins H, AA ands BB, or at 60⁰C for resin CC, and wound on rotating metal mandrels. The mandrels had been prepared with inflatable elastic bladder coverings. The fiber content by volume was about 60 percent. The fiber winding patterns, band widths and numbers of layers were carefully controlled to exactly duplicate each other. The bottles were cured with rotation in a forced air oven using a ten-hour cure cycle which ranged from 80 to 141°C. The finished bottles had an excellent appearance and all resins were well cured. Average bottle burst pressures, netting hoop fiber stresses, and bottle performance factors (performance factor equals PV/W where P is burst pressure, V is volume of the bottle and W is weight of the bottle) are compared in Table II. These data show that the formulation H resin delivered higher netting hoop fiber stresses and higher PV/W performance factors than the higher density epoxy resins.

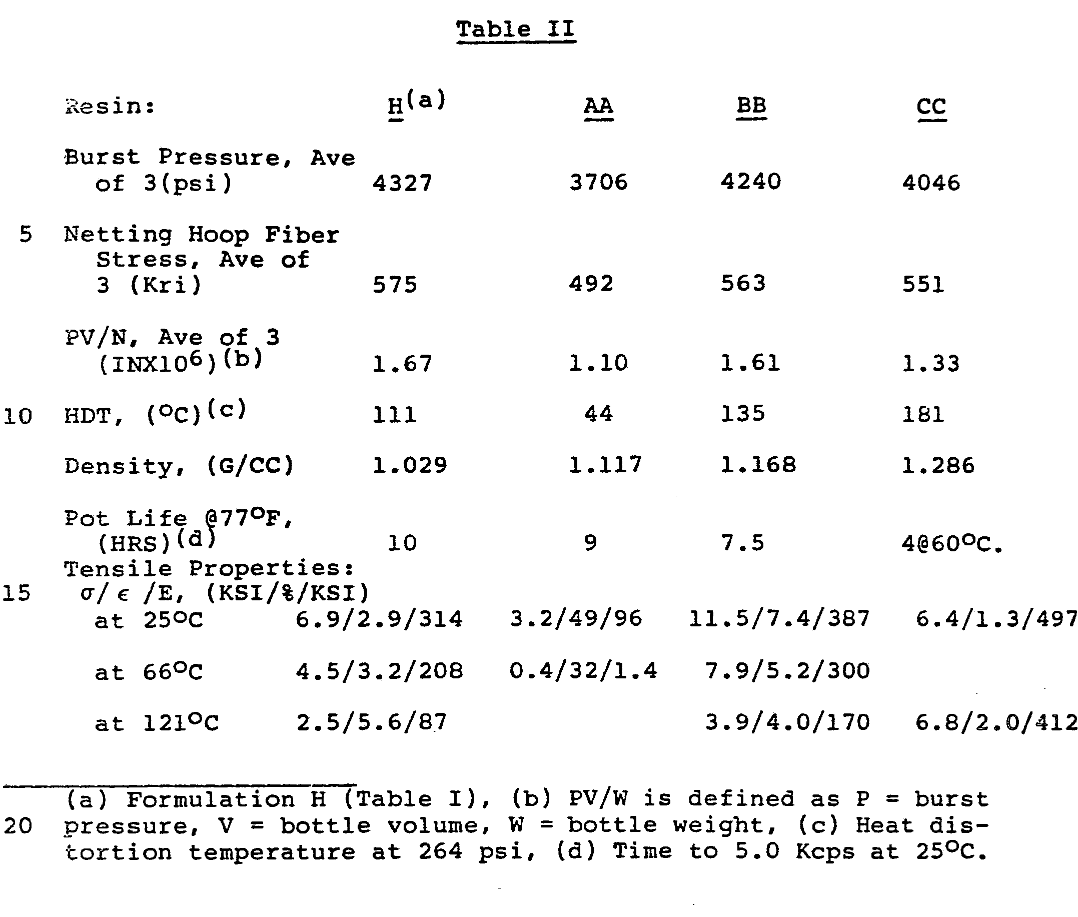

The neat resin properties show that low density resin, Formulation H has very good high temperature properties, lower density, and longer ambient pot life than the epoxy Resins.

### Example 3

A series of liquid filament-winding resins were prepared in accordance with this invention to determine properties attributable to various ethylenically unsaturated reactive diluents. Table IV shows the results when these diluents were formulated into resins having the ingredients of composition A of Example 1 except for the diluent. A brief study of Table IV reveals that isobornyl methacrylate (IBOMA) is the best diluent for low linear shrinkage, and it also gives high HDT and moderately low density, but its volatility is very high. Hexanedioldimethacrylate (HDDMA) gives very high HDT's, too high to measure, moderate linear shrinkage, low volatility, but high density. Lauryl methacrylate (LMA) gives low density density, low volatility and moderate HDT, but shrinkage is very high.

Table V illustrates resin physical properties as a function of ethylenically unsaturated diluent type, blend and concentration. As can be seen from Table V, altering E/C ratios from 0.95 to 1.05 and adding 10% hydrogenated carboxy terminated polybutadiene does not significantly alter volatility or shrinkage. As is also seen, as volatility decreases, density increases. The reactive diluent t-butyl-styrene (TBS) gives the lowest density but also highest shrinkage and volatility.

Addition of some isobornyl methacrylate (IBOMA) in I significantly reduces shrinkage, but not HDT or volatility, and increases density. IBOMA alone in J offers the lowest linear shrinkage and good HDT, but volatility is high. Reducing the IBOMA concentration (in K) reduces volatility and increases shrinkage. Addition of hexanediol dimethacrylate (HDDMA) in L and M reduces volatility and increases HDT without seriously increasing shrinkage or density. Addition of both lauryl methacrylate (LMA) and HDDMA significantly lowers volatility (in N and O) while maintaining good HDT and density, but linear shrinkage increases about 50%. Very low volatilities of 3 to 4% are possible with good HDT and moderate shrinkage by blending HDDMA and QM657 (in P and Q), but density increases significantly to 1.05 to 1.06 g/cc. Volatility was also reduced by reducing the initial diluent level, and thus increasing viscosity. The higher viscosity mixes (M and Q) were less volatile.

IBOMA/HDDMA and LMA/IBOMA/HDDMA systems were selected for further study based on the results shown in Table V. Both epoxy-to-carboxy (E/C) and peroxide-to-double-bond (P/DB) ratios were varied using these diluent systems and the results shown in Table VI. A comparison of neat resin physical and ambient mechanical properties (in Table VI) shows that the variations in E/C and P/DB generally produced only small changes. In general, the IBOMA/HDDMA formulations have significantly lower shrinkage and higher HDT, but also higher volatility and slightly higher densities than the LMA/IBOMA/HDDMA formulations.

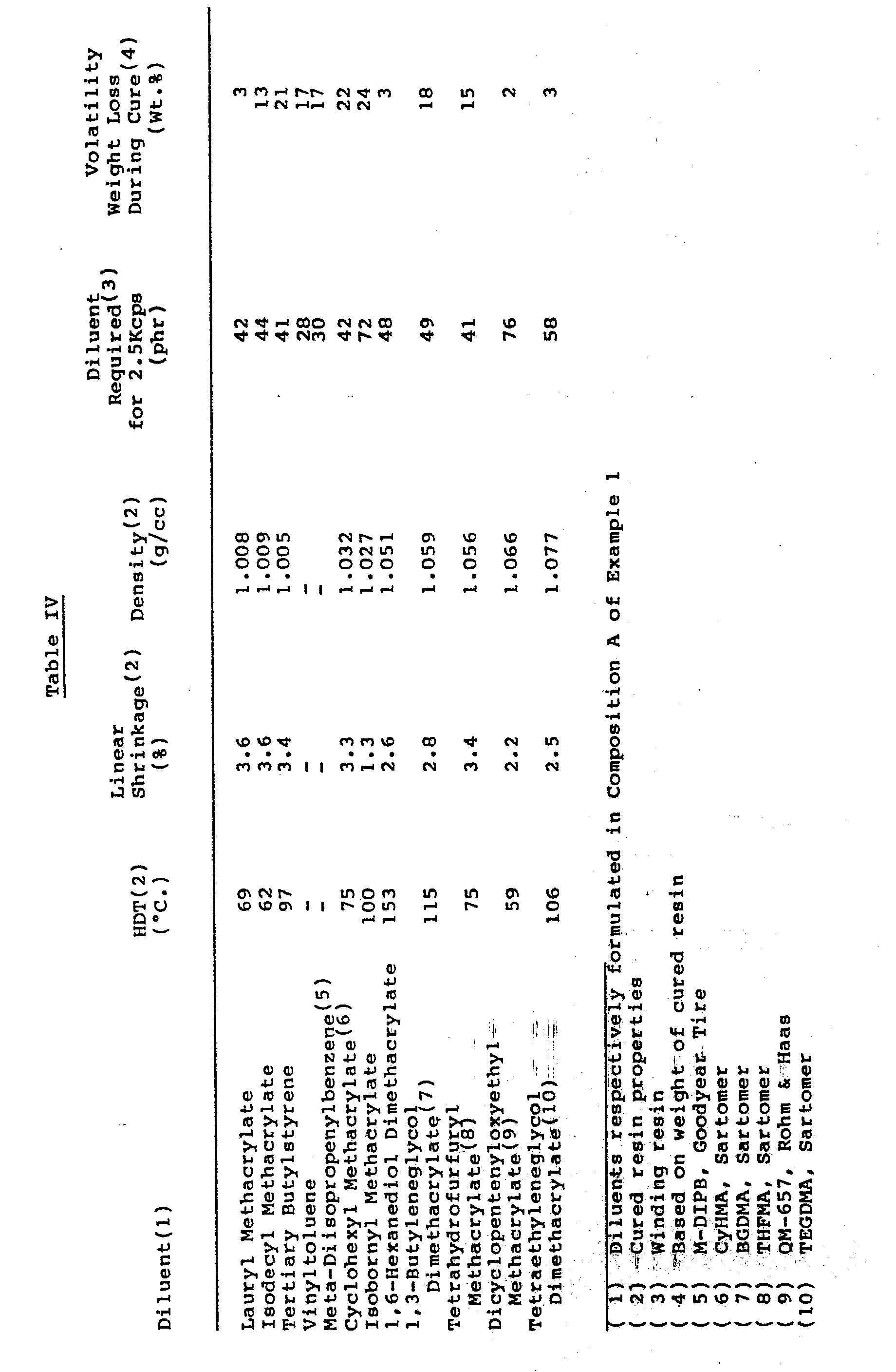

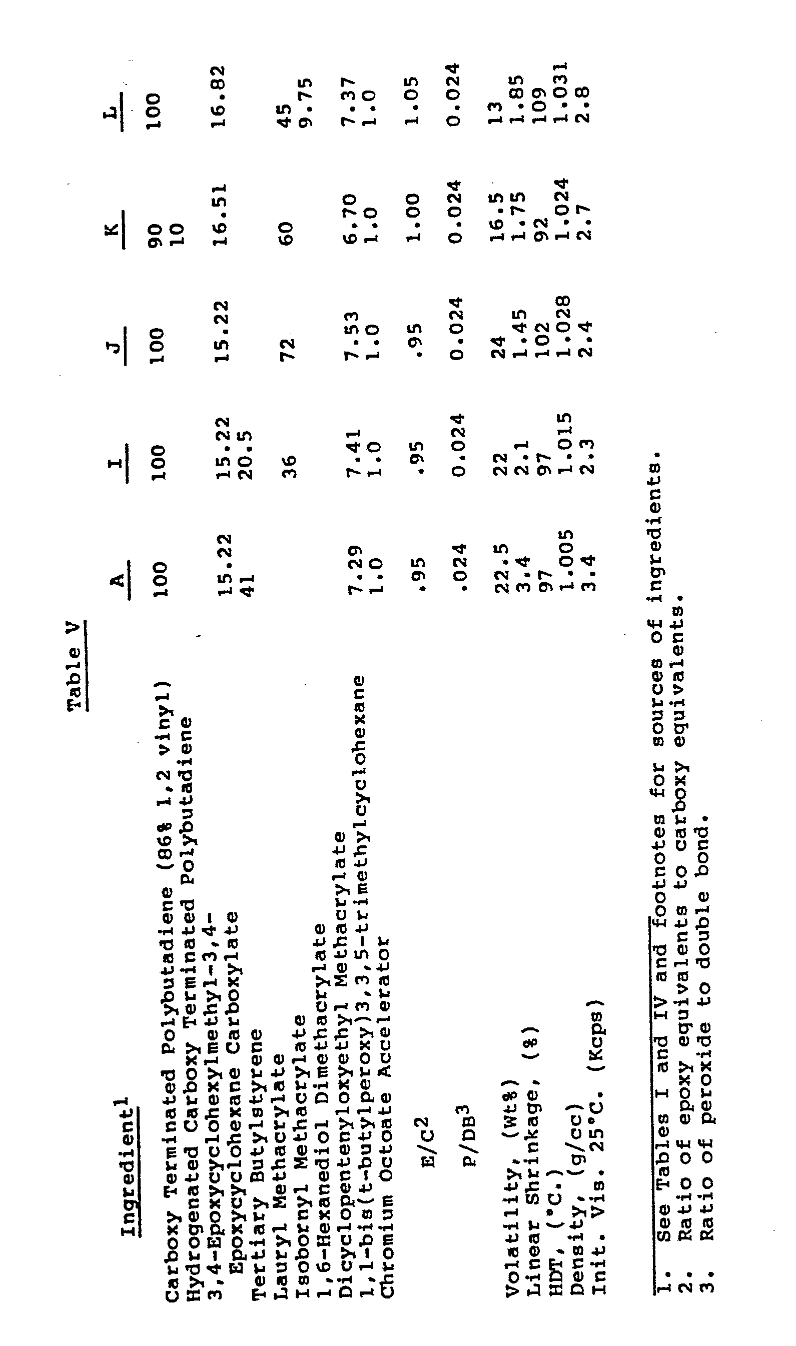

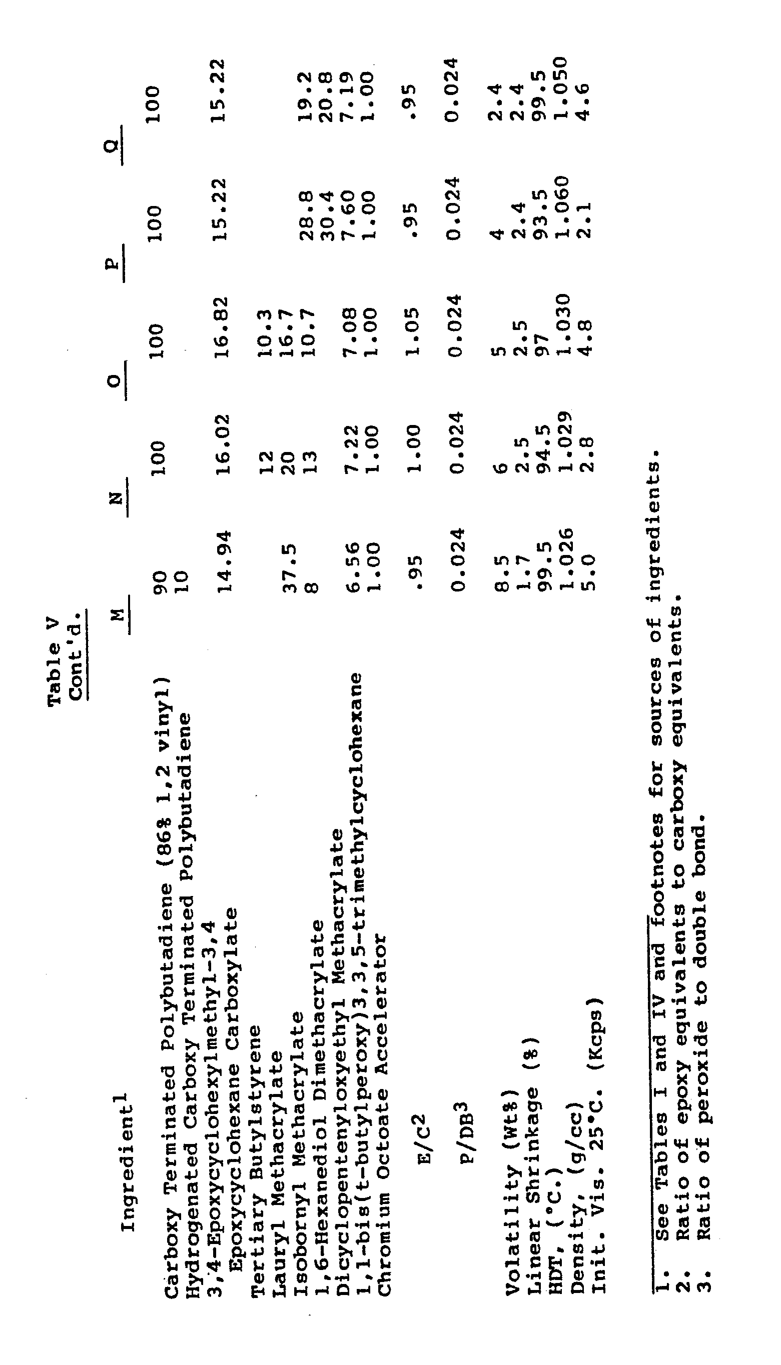

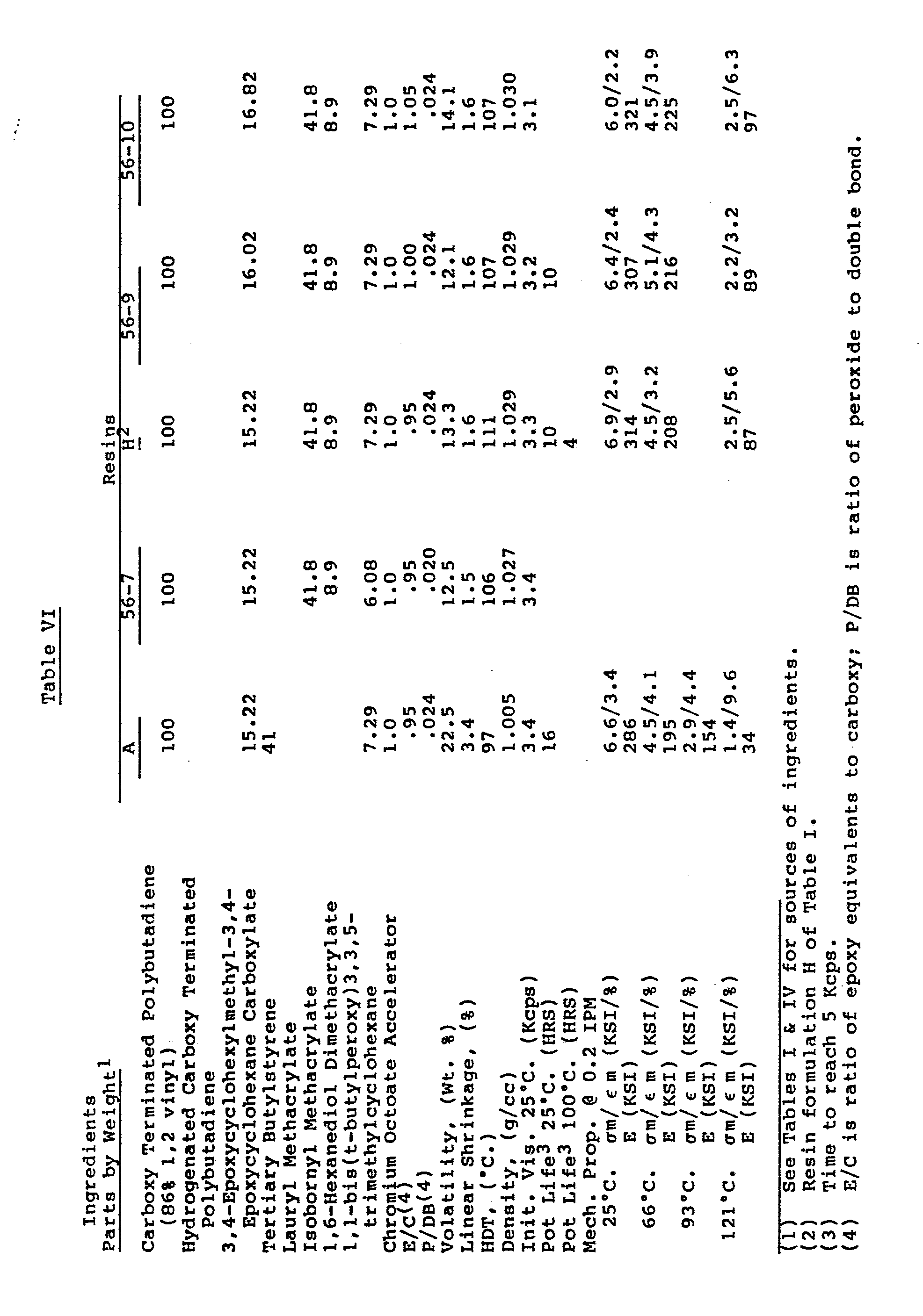

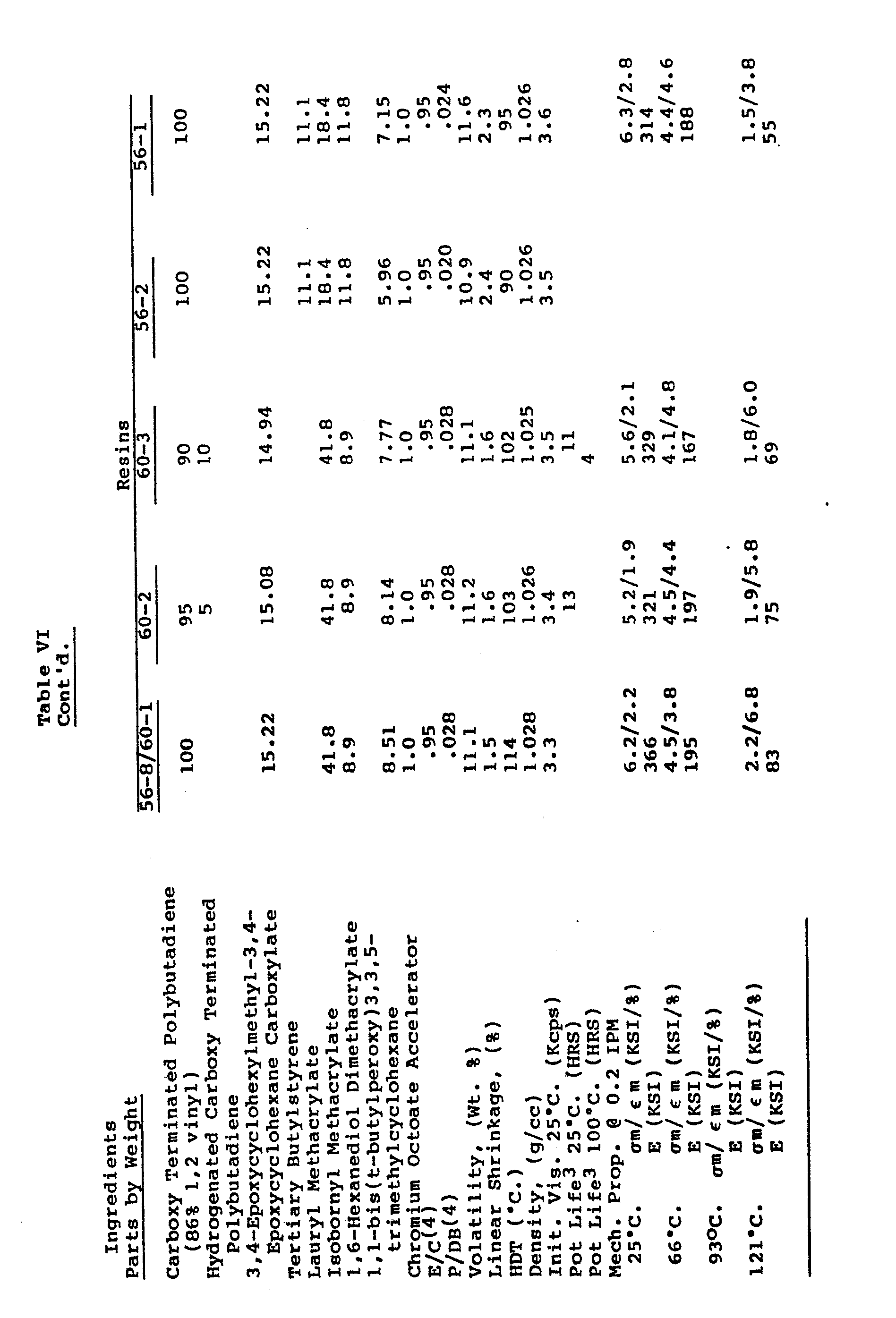

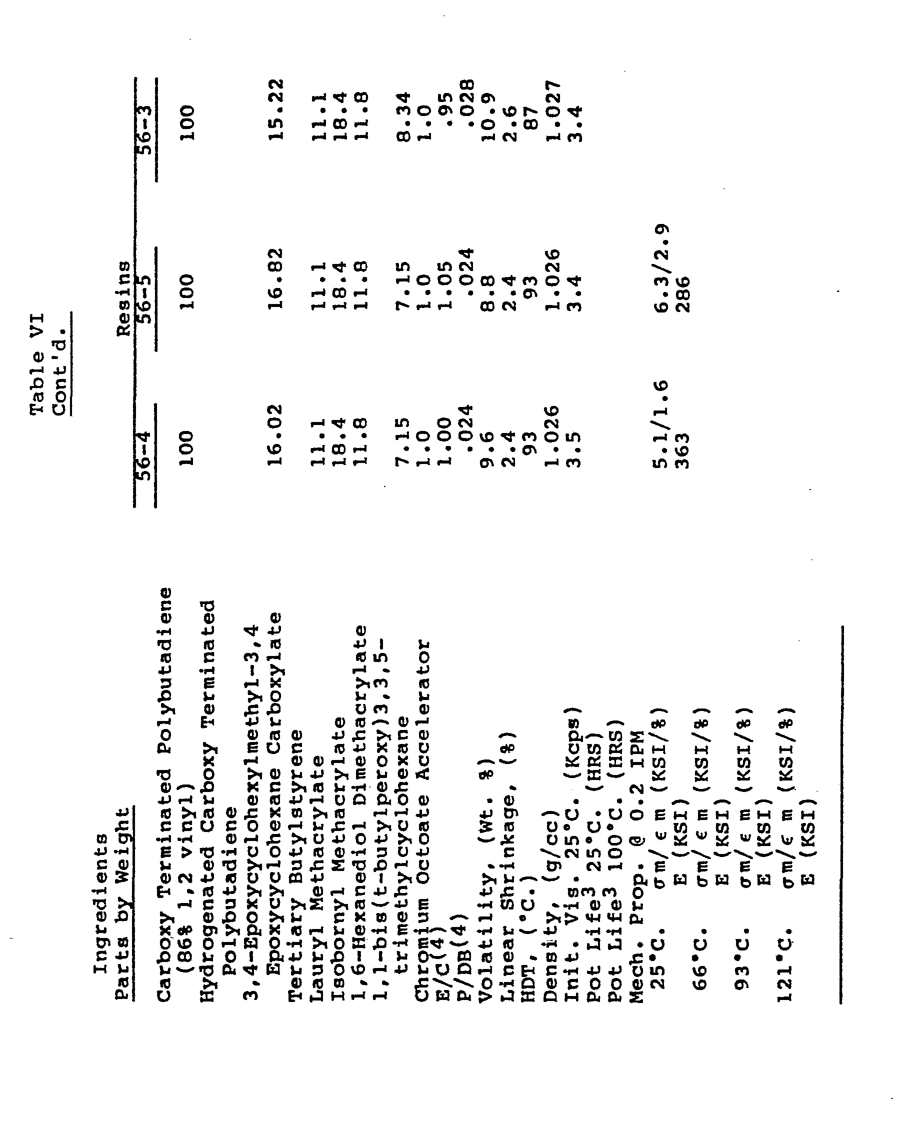

### Example 4

Set forth in Table VII below are results comparing a cured resin of this invention and a currently used epoxy resin with respect to degradation of mechanical properties after exposure to 149°F. in air. As can be seen, the cured resin of this invention has greater thermal stability. Resin hardness of the cured resin of this invention determined using a Barber-Colman Impressor (GYZJ 934-1) increased only slightly after five days (i.e., 33.0 to 36.1). In another test, it was shown that the antioxidants, Agerite Geltrol, Polyguard and combinations thereof did not affect significantly the changes in mechanical properties.

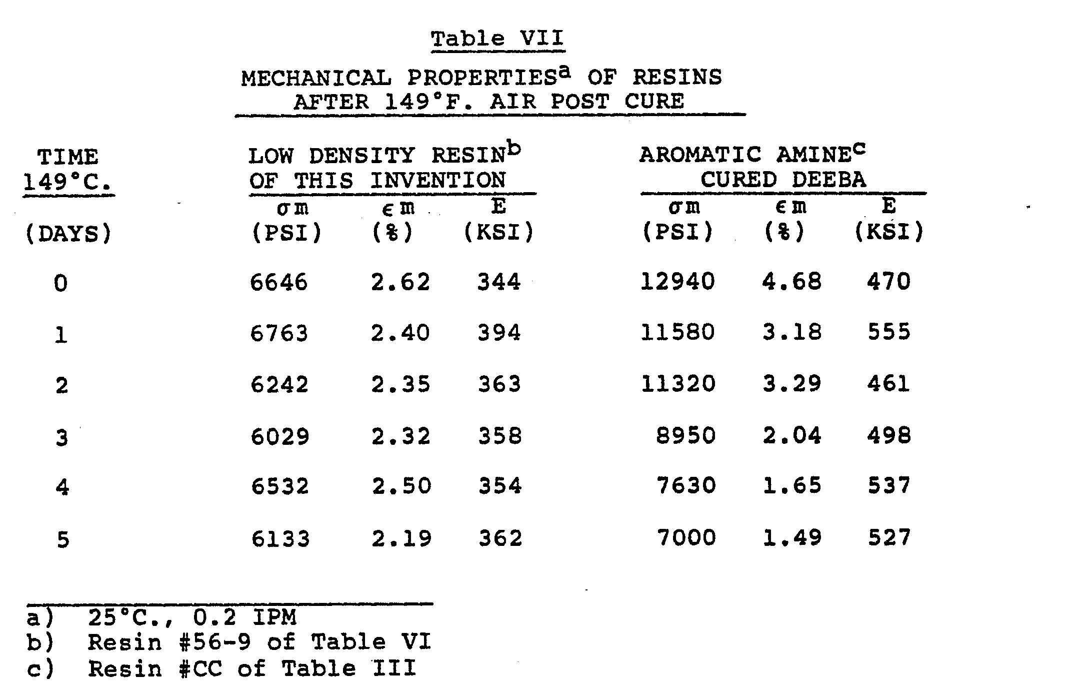

## Claims

1. A process for preparing liquid resins that are suitable for filament-winding of composite structures, comprising intimately mixing a polymer component containing a high vinyl, functionally-terminated poly(l,2-butadiene) that is reactive with epoxy groups through the functional groups, an epoxy component, an ethylenically unsaturated component, a peroxide free-radical initiator component, and a catalyst that catalyzes the reaction between the functional groups and epoxy groups, is characterized in that (i) the polymer component consists essentially of (a) between about 60 and 100 parts by weight of high vinyl functionally-terminated polybutadiene that has a molecular weight between about 1,000 and 3,000, and (b) between about 0 and 40 parts by weight of a low vinyl functionally-terminated polybutadiene having a molecular weight between about 1,000 and 3,000 or a hydrogenated and functionally-terminated polybutadiene or a mixture of the two, each of (a) and (b) having about 2 func- tional groups per polymer molecule that are reactive with epoxy; (ii) the epoxy component consists essentially of one or more diepoxy compounds each having two cycloaliphatic groups in each of which adjacent carbon atoms are connected by an oxygen atom to provide between about 0.5 and 1.05 epoxy groups for each of the said epoxy-reactive functional groups; (iii) up to about 80 parts by weight of an ethylenically unsaturated component that includes a methacrylate compound, per 100 parts by weight of the polymer component, is included in the mixture to lower the viscosity of the liquid resin; and (iv) the peroxide free-radical initiator component has a 10-hour half-life temperature between about 90°C and 105°C.

2. A process for preparing liquid resins as claimed in claim 1, further characterized in that the high vinyl polymer component (a) consists essentially of carboxy-terminated polybutadiene.

3. A process for preparing liquid resins as claimed in claim 1 or 2, further characterized in that the ratio of epoxy groups to the said functional groups is between about 0.9-1.0

4. A process for preparing liquid resins as claimed in claim 1, 2, or 3, further characterized in that the amount of the unsaturated reactive diluent component is between about 30 and 76 parts by weight.

5. A process for preparing liquid resins as claimed in any of the preceeding claims, further characterized in that the unsaturated reactive diluent component includes a methacrylate compound.

6. A process for preparing liquid resins as claimed in claim 5, further characterized in that the unsaturated reactive diluent component essentially comprises a methacrylate compound.

7. A process for preparing liquid resins as claimed in claim 6, further characterized in that the methacrylate compound includes isobornylmethacrylate.

8. A process for preparing liquid resins as claimed in any of the preceeding claims, further characterized in that the undiluted peroxides with 10-hour half life temperature between about 90°C and 100°C, are also completely soluble in the resin mixture.

9. A process for preparing liquid resins as claimed in any of the preceeding claims, further characterized in that the catalyst contains chromium octoate.

10. A liquid resin that is suitable for filament-winding of composite structures, characterized in that it is made by the process claimed in any of the preceeding claims, it has a ,pot life, sufficient for filament-winding, of about 10 or more hours, and it cures to thermally stable, solid, crosslinked resins having a linear shrinkage value less than 3%.

11. The use of a liquid resin as claimed in claim 10 for filament-winding of composite structures, including the steps of impregnating a fiber with the said resin at ambient temperature, winding the impregnated fiber on a rotating mandrel, and sandwiching it between release-paper sheets, characterized in that the resin is maintained at a temperature between about 27°C and 82°C for a time sufficient for said resin to have a viscosity between about 70,000 and 125,000 cps at 50°C.
